# EUROPEAN PATENT APPLICATION

(11) **EP 4 789 520 A1**
(43) Date of publication of application: **12.08.2026**
(21) Application number: 25382107.8
(22) Date of filing: 10.02.2025
(51) Int. Cl.: A01B 59/06, A01B 51/02, A01G 3/04

(54) **SUPPORT FOR A WORKING TOOL OF A VEHICLE AND A VEHICLE COMPRISING SUCH SUPPORT**

(71) Applicant: Marinelan S.L., 01439 Andagoia (ES)
(72) Inventor: LANDIN MARIN, Teresa, 01439 ANDAGOIA (ES)
(74) Representative: Galbaian S.Coop.

(57) **Abstract**

The invention relates to a support (100) for a working tool of a vehicle and a vehicle comprising said support (100), wherein the support (100) has a fixed portion (110), a first movable portion (120) and a second movable portion (130) which is attachable to the tool, the fixed portion (110) has attachments (111a) for connecting the lifting arms (310) of the vehicle, the first movable portion (120) has a first actuator (121) for moving the first movable portion (120) relative to the fixed portion (110), and the second movable portion (130) has a second actuator (131) for moving the second movable portion (130) with respect to the first movable portion (120), wherein the first movable portion (120) is connected to the fixed portion (110) at a first axis of rotation (x1) so that the first movable portion (120) moves with respect to the fixed portion (110) according to a first rotational movement (R1), and wherein the second movable portion (130) is connected to the first movable portion (120) in a second axis of rotation (x2) so that the second movable portion (130) moves with respect to the first movable portion (120) according to a second rotational movement (R2).

## Description

### TECHNICAL FIELD

The present invention relates to a support for a working tool of a vehicle and a vehicle comprising such a support. In particular the invention relates to a support for a tool for carrying out agricultural work.

### PRIOR ART

Vehicles for agricultural work are known, where, for example, the vehicle travels on a road, or on a path, while performing such work on one side or the other side of the road or path. For example, agricultural work may involve cutting leaves, branches, bark or other plant debris.

Generally, these vehicles usually have a working tool fixed to a hydraulic arm of the vehicle, so that the work is carried out from the front of the vehicle while the driver can see the object to be cut. However, these vehicles have a specific working tool associated with them, so that their versatility is reduced, as it is not possible to carry out different jobs, such as pruning trees, hedges or bushes, clearing land, or mowing grass.

In order to obtain the necessary versatility, supports are known to be attached to the hydraulic arm of a vehicle, and different working tools can be coupled to this support. For example, tractors are known to have lifting arms that end in a support on which a shovel is placed, and the shovel can be removed to place a working tool, such as a brush cutter, on the support.

US7418985B2 shows a support for a working tool of a vehicle which comprises a fixed portion for connecting the working end of lifting arms of the vehicle, a first movable portion having a first actuator for displacing the first movable portion with respect to the fixed portion, and a second movable portion coupleable to the working tool, the second movable portion having a second actuator for displacing the second movable portion with respect to the first movable portion. The first movable portion moves in a rectilinear motion in a direction perpendicular to the direction of travel of the vehicle to laterally move the working tool with respect to the vehicle, while the second movable portion moves in a rotational motion to tilt the working tool at an angle of between 0° and 90°. The support can be removed to provide a shovel on the lifting arms of the vehicle, so that the vehicle can be used interchangeably as an excavating machine or a brushcutting machine.

### DISCLOSURE OF THE INVENTION

The object of the invention is to provide a support for a working tool of a vehicle and a vehicle comprising such a support, as defined in the claims.

An aspect of the invention relates to a support for a working tool of a vehicle comprising:
- a fixed portion having attachments for connecting the working end of at least one lifting arm of the vehicle,
- a first movable portion having a first actuator for moving the first movable portion relative to the fixed portion, and
- a second movable portion attachable to the working tool, the second movable portion having a second actuator for moving the second movable portion relative to the first movable portion.

According to the invention, the first movable portion is connected to the fixed portion at a first axis of rotation so that the first movable portion moves relative to the fixed portion according to a first rotational movement, and the second movable portion is connected to the first movable portion at a second axis of rotation so that the second movable portion moves relative to the first movable portion according to a second rotational movement.

This provides a versatile support that allows a working tool to be mounted on the lifting arm of a vehicle in place of another tool, such as a bucket, thus creating a versatile multi-purpose vehicle.

The first rotational movement of the support moves the first and second movable portions in a lateral movement with respect to the forward direction of the vehicle to move the working tool away from the vehicle. Thus, the tool can be positioned to one side of the vehicle to work on objects on one side of a road on which the vehicle is moving, while the working tool does not interfere with the visibility of the vehicle driver. On the other hand, the second rotational movement moves the second movable portion according to a tilting movement to adapt the angle of inclination of the working tool with respect to the object to be worked on. Thus, the working tool can be arranged in different angular positions, for example, perpendicular or transverse to the ground for clearing brush on the sides of a path, horizontal to the ground for mowing grass on the ground, or in other positions depending on the object to be worked on. In addition, the two rotational movements can be interpolated to adapt the lateral distance the working tool protrudes from the vehicle, as well as the inclination and height of the working tool in relation to the ground, resulting in a wide variety of angular positions of the working tool

Another aspect of the invention relates to a vehicle comprising at least one lifting arm with a working end where the support defined above is coupled.

In this way, as the support of the working tool is mounted on the lifting arm of the vehicle, which has a vertical translation movement to raise and lower the support, the range of movement of the working tool is considerably increased.

These and other advantages and features of the invention will become apparent in view of the figures and the detailed description of the invention.

### DESCRIPTION OF THE DRAWINGS

Figure 1 shows a side view of a vehicle having a support for a working tool according to the invention.
Figure 2 shows a front view of the vehicle of figure 1, with the actuators of the movable portions in the rest position.
Figure 2a shows an enlarged detail of the support of the vehicle of the figure 2.
Figure 3 shows a front view of the vehicle with the support in an intermediate position with the first actuator in a maximum extension position and the second actuator in a rest position.
Figure 3a shows an enlarged detail of the support of the vehicle of the figure 3.
Figure 4 shows a front view of the vehicle with the support in a maximum extension position with both actuators in the maximum extension position.
Figure 4a shows an enlarged detail of the support of the vehicle of the figure 4.
Figure 5 shows a detailed top view of the support showing an anti-collision safety system that allows the working tool to be brought into a safety retracted position in the event of a collision.
Figure 6 shows a position correction system in a neutral working position having detectors to restrain the movement of the first movable portion by holding it in the neutral working position.
Figures 6a and 6b show the position correction system in two limit positions that restrict the movement of the first movable portion to maintain it in the neutral working position shown in figure 6.

### DETAILED DISCLOSURE OF THE INVENTION

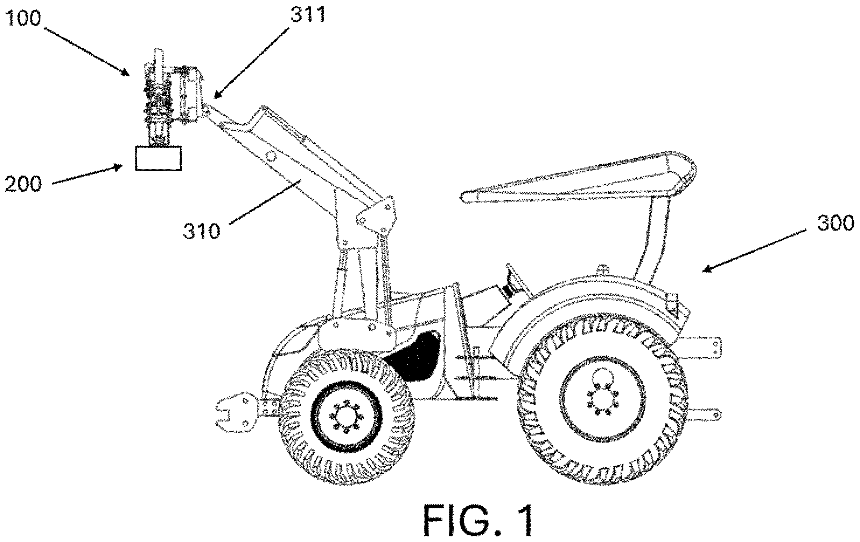

Figure 1 shows a side view of a vehicle 300 comprising at least one lifting arm 310 with a working end 311 wherein a support 100 of a working tool 200 is coupled. Preferably, the vehicle 300 comprises two lifting arms 310, which may be two hydraulic articulated arms 310.

The vehicle 300 may be a vehicle having a bucket or shovel that is coupled to the working end 311 of each lifting arm 310 of the vehicle 300, said bucket being removable for disposing the support 100 of the working tool 200. For example, the vehicle 300 may be an agricultural vehicle (tractor), or an industrial vehicle such as a telehandler or skid steer.

The working tool 200 may be a cutting tool for cutting objects such as leaves, branches, bark or other plant debris, e.g. a brush cutter, or it may be another tool for carrying out other agricultural work, e.g. nailing posts or putting up electric fences.

The support 100 of the working tool 200 comprises a fixed portion 110 having attachments 111a for connecting to the working end 311 of the lifting arm 310 of the vehicle 300, a first movable portion 120 having a first actuator 121 for moving the first movable portion 120 relative to the fixed portion 110, and a second movable portion 130 attachable to the working tool 200, the second movable portion 130 having a second actuator 131 for moving the second movable portion 130 relative to the first movable portion 120.

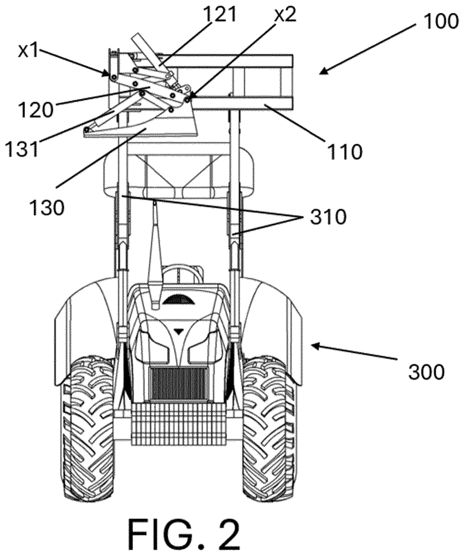

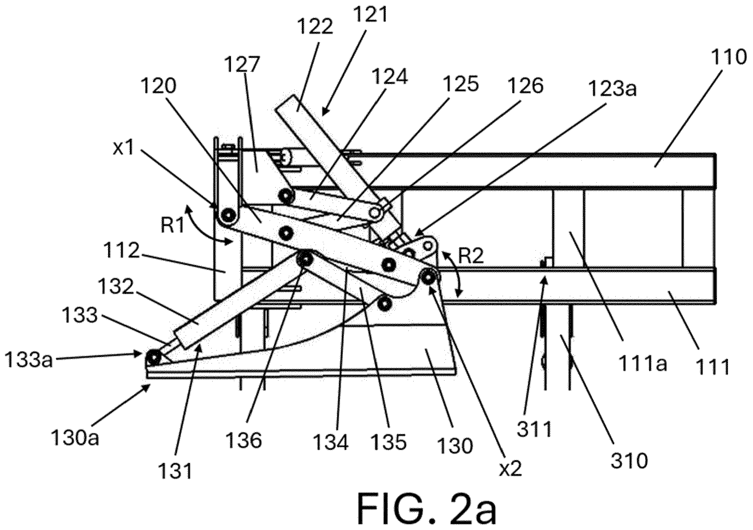

As seen in the example of figures 2 to 4, the first movable portion 120 is connected to the fixed portion 110 at a first axis of rotation x1 so that the first actuator 121 displaces the first movable portion 120 with respect to the fixed portion 110 according to a first rotational movement R1, such that the first movable portion 120 together with the second movable portion 130 are displaceable according to a lateral displacement movement with respect to the forward direction of the vehicle 300 to move the working tool 200 away from the vehicle 300. Additionally, the second movable portion 130 is connected to the first movable portion 120 at a second axis of rotation x2 so that the second actuator 131 displaces the second movable portion 130 with respect to the first movable portion 120 according to a second rotational movement R2, such that the second movable portion 130 is displaceable according to a tilting movement about the second axis of rotation x2 to adapt the angle of inclination of the working tool 200 with respect to an object on which work is required to be performed.

Preferably, the first actuator 121 and the second actuator 131 are linear actuators. Even more preferably, the first actuator 121 and the second actuator 131 are hydraulic cylinders. The hydraulic drive enables the position of the working tool 200 to be precisely controlled and ensures that the working tool 200 is held in position by withstanding the demanding forces that occur on the tool when the vehicle is in motion.

Preferably, the first actuator 121 has a liner 122 and a piston 123 which moves relative to the liner 122, the liner 122 of the first actuator 121 being attached to the fixed portion 110 with a first articulated arm 124 and attached to the first movable portion 120 with a second articulated arm 125, and the free end 123a of the piston 123 being attached to the first movable portion 120 at a pivot point proximate the second axis of rotation x2.

Preferably, the first articulated arm 124 and the second articulated arm 125 are attached to the same point 126 of the liner 122 of the first actuator 121, so that the transmission of forces is improved.

The first articulated arm 124 has a first end which is attached to the first actuator 121 at point 126 and a second end which is attached to a plate 127 of the fixed portion 110 extending in a plane parallel perpendicular to the forward direction of the vehicle 300.

The second articulated arm 125 has a first end which is attached to the first actuator 121 at point 126 and a second end which is attached to an intermediate point of the first movable portion 120 which is arranged between the first axis of rotation x1 and the second axis of rotation x2. Preferably said intermediate point is arranged in the vicinity of the first axis of rotation x1, at a point closer to the first axis of rotation x1 than to the second axis of rotation x2. For example, at a distance of ¼ of the first axis of rotation x1 with respect to an imaginary line joining both axes of rotation x1 and x2.

Preferably, the second actuator 131 has a liner 132 and a piston 133 which moves relative to the liner 132, the liner 132 of the second actuator 131 being attached to the first movable portion 120 with a third articulated arm 134 and attached to the second movable portion 130 with a fourth articulated arm 135, and the free end 133a of the piston 133 being attached to a free end 130a of the second movable portion 130.

Preferably, the third articulated arm 134 and the fourth articulated arm 135 are attached to the same point 136 of the liner 132 of the second actuator 131, so that the transmission of forces is improved.

The third articulated arm 134 has a first end which is attached to the second actuator 132 at point 126 and a second end which is attached to an intermediate point of the first movable portion 120 which is arranged between the first axis of rotation x1 and the second axis of rotation x2. Preferably said intermediate point is arranged in the vicinity of the second axis of rotation x2, at a point closer to the second axis of rotation x2 than to the first axis of rotation x2. For example, at a distance of 3/4 of the first axis of rotation x1 with respect to the imaginary line joining both axes of rotation x1 and x2.

The fourth articulated arm 135 has a first end which is attached to the second actuator 132 at point 126 and a second end which is attached to an intermediate point of the second movable portion 130 which is arranged between the second axis of rotation x2 and the free end 130a of the second movable portion 130. Preferably said intermediate point is arranged in the vicinity of the second axis of rotation x2, at a point closer to the second axis of rotation x2 than to the free end 130a of the second movable portion. For example, at a distance of 1/4 of the second axis of rotation x2 with respect to an imaginary line joining the free end 130a of the second movable portion 130 with the second axis of rotation x2.

Preferably, the first rotational movement R1 has a rotational amplitude of at least 150° and the second rotational movement R2 has a rotational amplitude of at least 180°.

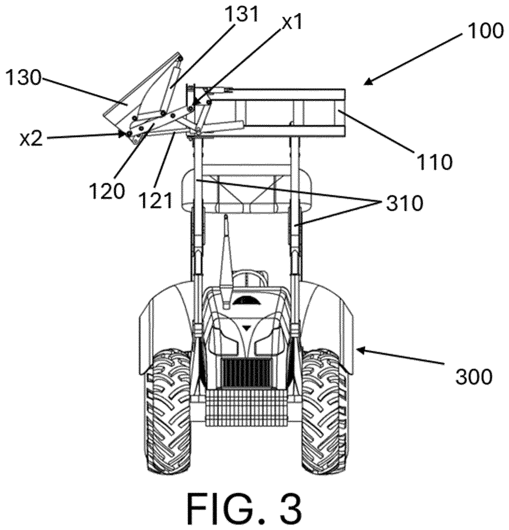

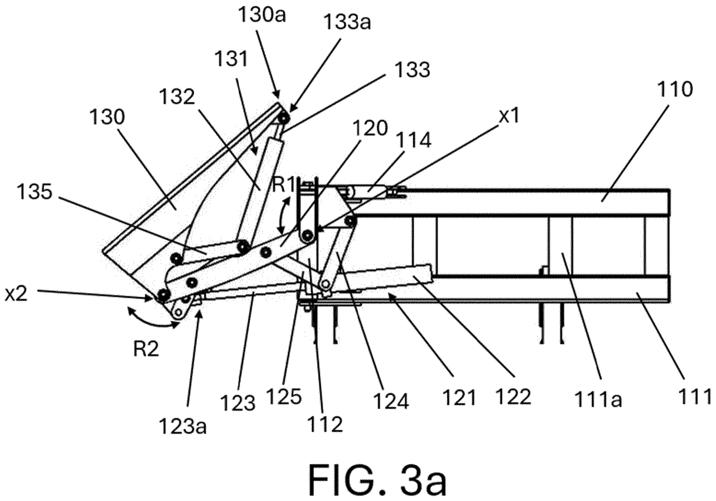

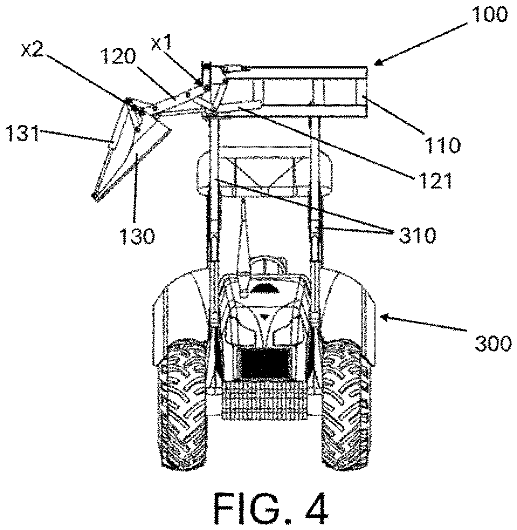

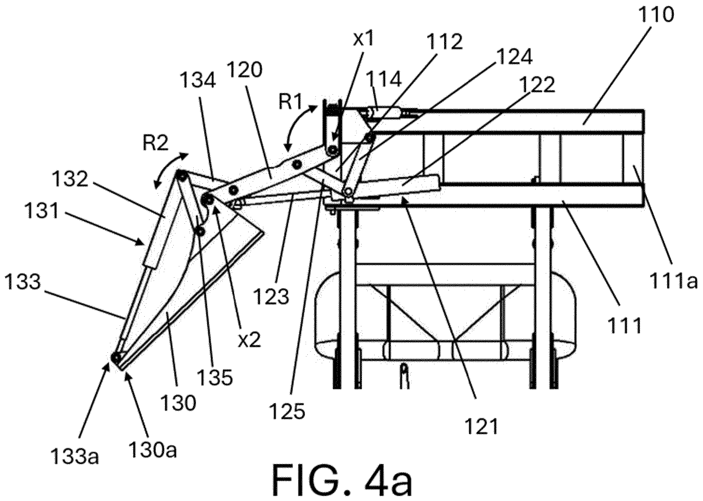

Figures 2, 3 and 4 show a front view of the vehicle 300 with the support 100 of the working tool 200 arranged in different positions, where for the sake of clarity the working tool 200 is not depicted. Figure 2 shows the support 100 in an rest position where the first actuator 121 and the second actuator 131 are retracted with the pistons 123 and 133 housed in their respective liners 121 and 131. Figure 3 shows the support 100 in an intermediate position where the first actuator 121 is in a maximum extension position with the piston 123 fully extended and the second actuator 131 is in a rest position with the piston 133 housed in the liner 132. Figure 4 shows the housing 100 in a maximum extension position where the first actuator 121 and the second actuator 131 are in a maximum extension position with the pistons 123 and 133 fully extended. For example, in the case of a requirement to clear brush from the side of a road, firstly, the first actuator 121 is activated in the maximum extension position to move the working tool 200 as far away from the vehicle 300 as possible, as shown in figure 3, and secondly the second actuator 131 is activated to position the tool 200 according to the required angle of inclination with respect to the object to be cut.

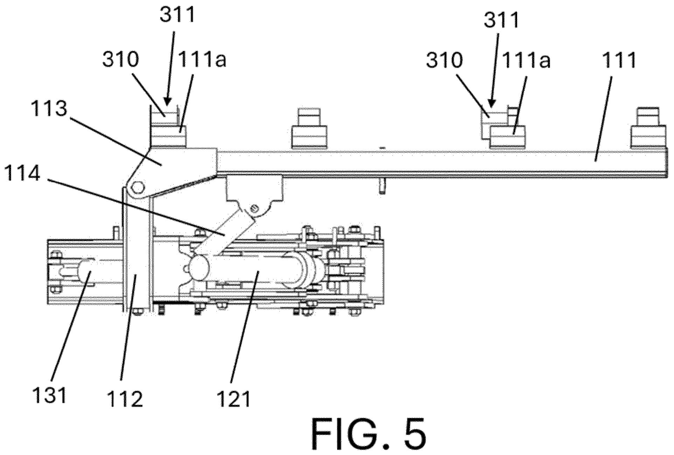

Figure 5 shows an anti-collision safety system that prevents the support 120 from breaking. Such a system allows that when the support 100 is moved sideways to cut objects located on the side of a road and the working tool 200 collides with an object that it cannot cut, for example the trunk of a tree, the support 100 carrying the working tool 200 can be retracted to a safety retracted position and that the advance of the vehicle 300 does not damage the tool 200 and/or the support 100

Accordingly, the fixed portion 110 of the support 100 comprises a first part 111 and a second part 112, the first part 111 having the attachments 111a for connecting to the working end 311 of the lifting arm 310 and the second part 112 being connected by hinges 113 with the first part 111, and wherein the second part 112 is attached to the first movable portion 110, the second part 112 being movable relative to the first part 111 between a working position of the working tool 200 and a safety retracted position of the working tool 200.

Preferably, the first part 111 is connected to the second part 112 by a third actuator 114 which moves the second part 112 relative to the first part 111 between the working position of the working tool 200 and the safety retracted position of the working tool 200, the first part 111 and the second part 112 forming an angle of 90° in the working position of the working tool 200 and an angle greater than 90° in the safety retracted position of the working tool 200.

Preferably, the actuator 114 is a spring-loaded actuator, which allows the second part 112 to move towards the safety retracted position of the working tool 200 when the second part 112 receives a force in excess of a predetermined safety force and which moves the second part 112 back towards the working position of the working tool 200 when the force received by the second part 112 is less than the predetermined safety force. For example, the actuator 114 may incorporate a mechanical or electronic force sensor that detects the force exerted on the second part 112. Thus, in the event that the working tool 200 collides with an object that causes the predetermined safe force to be exceeded, the second part 112 of the fixed portion 110 is moved from the working position of the working tool 200 to the safety retracted position of the working tool 200 until a driver of the vehicle 300 corrects the trajectory of the vehicle 300, whereupon the second part 112 would return to the working position of the working tool 200.

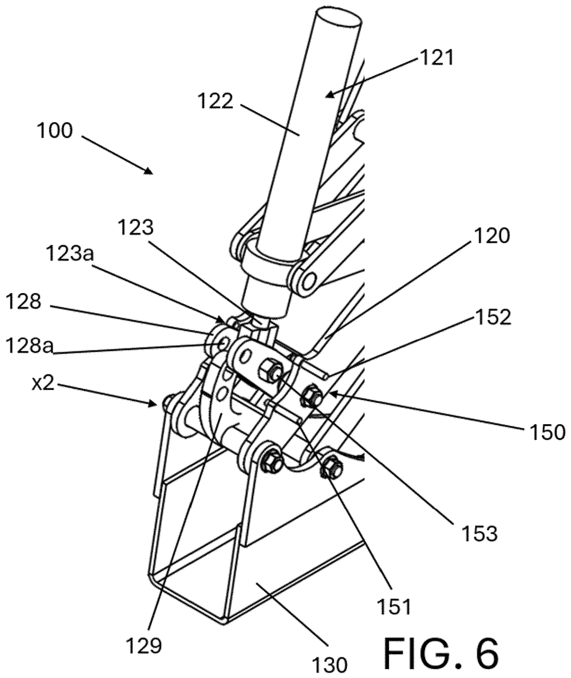

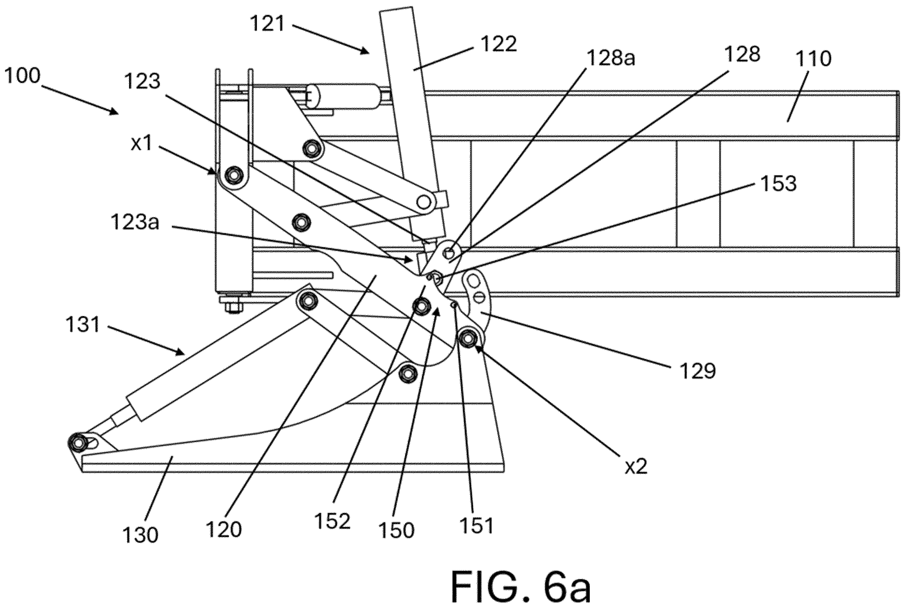

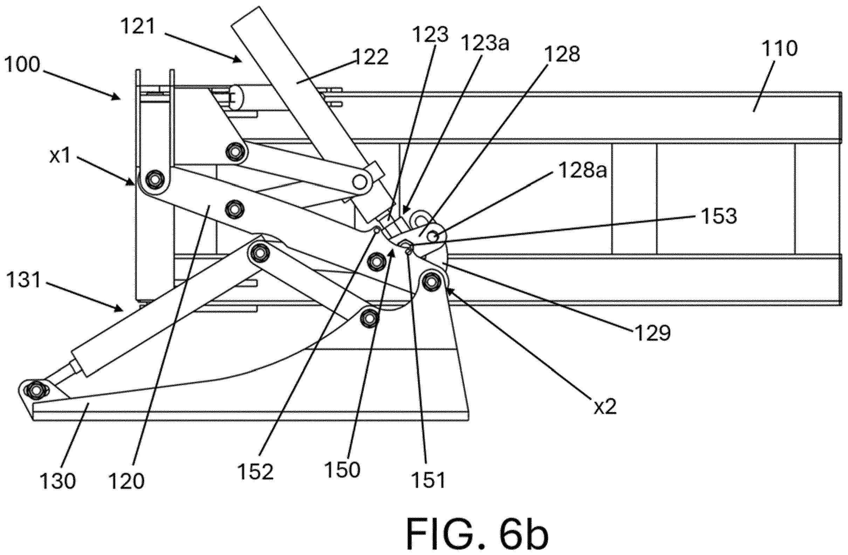

Figure 6 shows a position correction system that prevents the support 100 from being broken or damaged when the first movable portion 120 is in a neutral working position. In said neutral position, which for example can be adopted when the second movable portion 130 carrying the working tool 200 is arranged parallel to the ground for cutting grass, when the working tool 200 collides with an object located on the ground which causes an undesired movement of the support 100, the system detects said movement and allows correcting the position of the support 100 to bring it back to the neutral working position and to continue working with the support 100 in a suitable position.

Accordingly, the support 100 additionally comprises a sensor assembly 150 having a first detector 151 and a second detector 152 that are arranged on the first movable portion 120 moving together with the first movable portion 120 and a target 153 which is arranged on the first actuator 121 which moves the first movable portion 120.

The first detector 151 indicates a first limit position of the first movable portion 120 and the second detector 152 indicates a second limit position of the first movable portion 120. The detectors 151 and 152 are configured to detect the target 153, such that when one of the detectors 151 or 152 detects the target 153, said detector 151 or 152 that has detected the target 153 generates an output signal to move the first movable portion 120 towards a neutral working position between the first limit position and the second limit position, the first rotational movement R1 being limited between said limit positions, so that when the support 100 is working with the working tool 200 parallel to the ground and occasionally collides with an object on the ground causing an undesired movement of the first movable portion, the system allows correcting the position of the first movable portion 120 bringing it back to the neutral working position to continue working with the tool 200 parallel to the ground.

For example, the detectors 151 and 152 may be an inductive sensor that generates a magnetic field that is altered in the presence of the target 153, such alteration being used to generate the output signal to move the first movable portion 120 towards the neutral working position.

Alternatively, the detectors 151 and 152 may be Hall effect sensors which, in the presence of a magnetic target 153, generate the output signal which is used to move the first movable portion 120 towards the neutral working position. However, other types of non-contact sensors may be used, such as optical or infrared sensors. Alternatively, the detectors 151 and 152 may even be mechanical stops that generate the output signal when abutting against the target 153.

Preferably, the output signal generated by the detector 151 or 152 is sent to the first actuator 121 to move the first movable portion 120 towards the neutral working position. For example, the first actuator 121 is a hydraulic cylinder which may be controlled by a flow control valve that allows a certain amount of fluid to flow into the cylinder to move the piston 123 relative to the liner 122, such that the output signal generated by the detector 151 or 152 is sent to the flow control valve of the first actuator 121 to move the first actuator 121 towards the neutral working position. Alternatively, the output signal generated by the detector 151 or 152 may be sent to the lifting arms 310 of vehicle 300 to cause a displacement that pulls the first movable portion 120 towards the neutral working position. In that case, analogous to that described above, the output signal is sent to a flow control valve that controls the displacement of the hydraulic lifting arms 310 of the vehicle 300.

As seen in detail in figure 6, the free end 123a of the piston 123 of the first actuator 121 is attached to a connecting rod 128 on which the target 153 is arranged, the connecting rod 128 being movable together with the target 153 between the first limit position and the second limit position. Figure 6a shows the first limit position wherein the first movable portion 120 is in an upper position, figure 6b shows the second limit position wherein the first movable portion 120 is in a lower position, and figure 6 shows the neutral working position.

For example, the target 153 of the sensor assembly 150 may be a metal nut that connects the connecting rod 128 to the free end 123a of the piston 123 of the first actuator, such that the detectors 151 and 152 detect the metal nut at the limit positions.

Preferably, the connecting rod 128 is attached to the first movable portion 120 at a pivot point close to the second axis of rotation X2, and as can be seen in the figures, said pivot point may coincide with the intermediate point where the third articulated arm 134 is attached to the first movable portion 120.

As shown in Figure 6, the connecting rod 128 has a first end and a second end, the first end of the connecting rod 128 is attached to the first movable portion 120 and the second end of the connecting rod 128 has a hole 128a for receiving a bolt which secures the connecting rod 128 with a plate 129 that is solidly attached to the first movable portion 120, such that the connecting rod 128 is locked when attached to the plate 129 blocking the displacement of the first movable portion 120. In this way, when the support 100 is not in use, or when the vehicle 300 is not working and is moving towards the work site, the support 100 can be locked so that the actuators 121 and 131 are not damaged.

## Claims

1. Support (100) for a working tool (200) of a vehicle (300) comprising:
• a fixed portion (110) having attachments (111a) for connecting the working end (311) of at least one lifting arm (310) of the vehicle (300),
• a first movable portion (120) having a first actuator (121) for moving the first movable portion (120) relative to the fixed portion (110), and
• a second movable portion (130) attachable to the working tool (200), the second movable portion (130) having a second actuator (131) for moving the second movable portion (130) relative to the first movable portion (120),
**characterised in that** the first movable portion (120) is connected to the fixed portion (110) at a first axis of rotation (x1) so that the first movable portion (120) moves relative to the fixed portion (110) according to a first rotational movement (R1), and
the second movable portion (130) is connected to the first movable portion (120) at a second axis of rotation (x2) so that the second movable portion (130) moves relative to the first movable portion (120) according to a second rotational movement (R2).

2. Support according to claim 1, wherein the first actuator (121) and the second actuator (131) are hydraulic cylinders.

3. Support according to claim 1 or 2, wherein the first actuator (121) has a liner (122) and a piston (123) which moves relative to the liner (122), wherein the liner (122) of the first actuator (121) is attached to the fixed portion (110) with a first articulated arm (124) and to the first movable portion (120) with a second articulated arm (125), and wherein the free end (123a) of the piston (123) is attached to the first movable portion (120) at a pivot point close to the second axis of rotation (X2).

4. Support according to claim 3, wherein the first articulated arm (124) and the second articulated arm (125) are attached to the same point (126) of the liner (122) of the first actuator (121).

5. Support according to any one of the preceding claims, wherein the second actuator (131) has a liner (132) and a piston (133) which moves relative to the liner (132), wherein the liner (132) of the second actuator (131) is attached to the first movable portion (120) with a third articulated arm (134) and to the second movable portion (130) with a fourth articulated arm (135), and wherein the free end (133a) of the piston (133) is attached to a free end (130a) of the second movable portion (130).

6. Support according to claim 5, wherein the third articulated arm (134) and the fourth articulated arm (135) are attached to the same point (136) of the liner (132) of the second actuator (131).

7. Support according to any one of the preceding claims, wherein the first rotational movement R1 has a rotational amplitude of at least 150° and the second rotational movement R2 has a rotational amplitude of at least 180°.

8. Support according to any one of the preceding claims, wherein the fixed portion (110) comprises a first part (111) and a second part (112), the first part (111) having the attachments (111a) for connecting to the working end (311) of the lifting arm (310) and the second part (112) being connected by hinges (113) to the first part (111), and wherein the second part (112) is attached to the first movable portion (110), the second part (112) being movable relative to the first part (111) between a working position of the working tool (200) and a safety retracted position of the working tool (200).

9. Support according to the preceding claim, wherein the first part (111) is connected to the second part (112) by a third actuator (114) which moves the second part (112) relative to the first part (111) between the working position of the working tool (200) and the safety retracted position of the working tool (200), the first part (111) and the second part (112) forming an angle of 90° in the working position of the working tool (200) and an angle greater than 90° in the safety retracted position of the working tool (200).

10. Support according to any one of the preceding claims, further comprising a sensor assembly (150) having:
• a first detector (151) and a second detector (152) that are arranged on the first movable portion (120) moving together with the first movable portion (120), wherein the first detector (151) indicates a first limit position of the first movable portion (120) and the second detector (152) indicates a second limit position of the first movable portion (120), and
• a target (153) which is arranged on the first actuator (121) which moves the first movable portion (120), the detectors (151, 152) being configured to detect the target (153), such that when one of the detectors (151,153) detects the target (153), said detector (151,152) generates an output signal to move the first movable portion (120) towards a neutral working position between the first limit position and the second limit position, the first rotational movement (R1) being limited between said limit positions.

11. Support according to the preceding claim, wherein the output signal generated by the detector (151,152) is sent to the first actuator (121) to move the first movable portion (120) towards the neutral working position.

12. Support according to claim 10, wherein the output signal generated by the detector (151,152) is sent to the lifting arm (310) of the vehicle (300) to move the first movable portion (120) towards the neutral working position.

13. Support according to any one of claims 10 to 12, wherein the free end (123a) of the piston (123) of the first actuator (121) is attached to a connecting rod (128) on which the target (153) is arranged, the connecting rod (128) being movable together with the target (153) between the first limit position and the second limit position, and the connecting rod (128) being attached to the first movable portion (120) at the pivot point close to the second axis of rotation (X2).

14. Support according to the preceding claim, wherein the connecting rod (128) has a first end and a second end, the first end of the connecting rod (128) is attached to the first movable portion (120) and the second end of the connecting rod (128) has a hole (128a) for receiving a bolt which secures the connecting rod (128) with a plate (129) which is solidly attached to the first movable portion (120), such that the connecting rod (128) is locked when connected to the plate (129), blocking the displacement of the first movable portion (120).

15. Vehicle (300) comprising at least one lifting arm (310) with a working end (311) wherein is coupled the support (100) of the working tool (200) defined according to any one of the preceding claims.
